# EUROPÄISCHE PATENTSCHRIFT

(11) **EP 2 076 721 B1**
(45) Veröffentlichungstag und Bekanntmachung des Hinweises auf die Patenterteilung: **07.11.2018**
(21) Anmeldenummer: 07818164.1
(22) Anmeldetag: 14.09.2007
(51) Int. Cl.: F25B 17/08, F25B 27/00

(54) **ADSORPTIONSWÄRMEPUMPE MIT WÄRMESPEICHER**
ADSORPTION HEAT PUMP WITH HEAT ACCUMULATOR
POMPE À CHALEUR À ADSORPTION DOTÉE D'UN ACCUMULATEUR DE CHALEUR

(30) Priorität: 18.09.2006 DE 102006043715
(43) Veröffentlichungstag der Anmeldung: 08.07.2009
(73) Patentinhaber: Fraunhofer-Gesellschaft zur Förderung der angewandten Forschung e.V., 80686 München (DE)
(72) Erfinder: MUNZ, Gunther, 78476 Allensbach (DE); SCHMIDT, Ferdinand, 79106 Freiburg (DE); NUNEZ, Tomas, 79106 Freiburg (DE); SCHNABEL, Lena, 79110 Freiburg (DE)
(86) Internationale Anmeldenummer: PCT/EP2007/008021
(87) Internationale Veröffentlichungsnummer: WO 2008/034561

(56) Entgegenhaltungen:
- EP-A- 1 076 219
- DE-A1- 4 302 281
- DE-A1- 4 333 829
- DE-A1- 19 824 315
- DE-A1- 19 908 666
- DE-U1- 9 002 016
- US-A- 2 486 833
- US-A- 4 509 337
- US-A1- 2002 053 214

## Beschreibung

### Technisches Gebiet

Die Erfindung betrifft eine Adsorptionswärmepumpe oder -kältemaschine und einen zum effizienten Betrieb geeigneten Wärmespeicher.

### Stand der Technik

Der COP (Coefficient of Performance), also das Verhältnis von Nutzwärme oder Nutzkälte zu benötigter Antriebswärme, von Adsorptionskältemaschinen und -wärmepumpen ist typischerweise geringer als der von entsprechenden Absorptions-Anlagen unter identischen Zyklenbedingungen. Eine thermodynamische Analyse (z.B. Meunier et al. 1996, 1997, 1998) zeigt, dass dies bei der Adsorption v.a. an der Entropieproduktion liegt, die bei einer Kopplung des Adsorbers an die Wärmequellen und -senken fester Temperatur entsteht.

Dies sei am Beispiel der Kältemaschine verdeutlicht: Die Temperatur des Adsorbers schwankt im Verlauf des Zyklus zwischen der höchsten zur Verfügung stehenden Desorptionstemperatur und der niedrigsten Adsorptionstemperatur, bei der die Adsorptionswärme noch an die Umgebung abgegeben werden kann (Rückkühlung, z.B. im Kühlturm). Die Antriebswärmequelle (Gasbrenner; Solaranlage) liefert jedoch i.A. Wärme auf konstantem Temperaturniveau. Somit ist die Entropieproduktion im kältesten Zustand des Adsorbers (zu Beginn der Desorptionsphase) am größten. Analog verhält es sich mit der Entropieproduktion bei der Rückkühlung: Der Rückkühler wird i.a. auf konstantem Temperaturniveau gehalten, die Entropieproduktion ist hier am größten zu Beginn der Adsorptionsphase, wenn der Adsorber am heißesten ist.

Die Entropieproduktion für verschiedene Adsorptionszyklen wurde von den Arbeitsgruppen um Meunier und Pons in Frankreich detailliert untersucht (siehe dazu F. Meunier, F. Poyelle, M. D. LeVan: "Second Law Analysis of Adsorption Refrigeration Cycles : The Role of Thermal Coupling Entropy Production". Applied Thermal Engineering 17, 43-55, 1997, sowie: M. Pons, F. Poyelle: "Adsorptive machines with advanced cycles for heat pumping and cooling applications", Internat. Journal of Refrigeration 22, 27-37, 1999). Dabei wurde gezeigt, dass die Entropieproduktion deutlich verringert und der COP deutlich erhöht werden kann, wenn die Wärmerückgewinnung optimiert wird. Ziel ist immer, den Adsorber in jedem Betriebszustand mit einer möglichst geringen Temperaturdifferenz zur Wärmequelle bzw. -senke zu betreiben. In der Praxis gibt es eine minimale Temperaturdifferenz, die benötigt wird, um dem Adsorber die gewünschte Leistung entziehen zu können.

In der Literatur werden nun im wesentlichen zwei Arten zur Realisierung dieser Wärmerückgewinnung vorgeschlagen:
Erstens eine Kopplung von mehreren Adsorbern auf eine Art und Weise, dass Wärme, die in einem noch vollständig desorbierten Adsorber auf dem höchsten Temperaturniveau der Adsorption frei wird, in einem anderen Adsorber, der gerade zu Beginn seiner Desorptionsphase ist, für die Desorption genutzt werden kann.

Zweitens die Realisierung einer "thermal wave" (US 4,694,659) in einem Kreis mit zwei Adsorbern. Dabei durchläuft ein Temperaturgradient die beiden in einem Fluidkreis hintereinander geschalteten Adsorber, wobei in Strömungsrichtung zwischen den adsorbierenden und den desorbierenden Adsorber der Nacherhitzer (die Hochtemperatur-Wärmequelle) geschaltet ist und zwischen den desorbierenden und den adsorbierenden Adsorber der Rückkühler geschaltet ist (die Mitteltemperatur-Wärmesenke). Zum Umschalten zwischen De- und Adsorption wird die Strömungsrichtung des Fluids umgekehrt und die Durchströmung von Rückkühler und Nacherhitzer so umgeschaltet, dass sich wieder die oben genannte Durchströmungsreihenfolge ergibt.

Hauptnachteil der "thermal wave" ist, dass für eine signifikante Erhöhung des COP der Temperaturgradient recht steil sein muss, damit z.B. während eines möglichst großen Teils der Adsorptionsphase das Wärmeträgerfluid den Adsorber mit der maximalen Adsorptionstemperatur verlässt (und die per Nachheizung zuzuführende Wärmemenge minimiert wird). Ein steiler Temperaturgradient bedeutet aber auch, dass zu jedem Zeitpunkt nur ein kleiner Teil des Adsorbers aktiv ist (d.h. adsorbiert) und der größere Teil des Adsorbers entweder bereits vollständig adsorbiert hat oder noch nicht mit der Adsorption begonnen hat. Dies wirkt sich negativ auf die Leistungsdichte der Kältemaschine (specific cooling power, SCP) aus. Bei der "thermal wave" besteht also ein starker Zielkonflikt zwischen den Zielen eines hohen COP und einer hohen Leistungsdichte. Zudem muss bei der "thermal wave" der gesamte Adsorber seriell durchströmt werden, wodurch sich lange Wege für das Wärmeträgerfluid und somit hohe Druckverluste und Pumpenergieverbräuche ergeben. Diese Probleme mögen mit dazu beigetragen haben, dass in den zwanzig Jahren seit der Patentanmeldung von Shelton (US 4,694,659) keine Adsorptionswärmepumpe oder -kältemaschine auf den Markt gebracht wurde, die das Prinzip der "thermal wave" realisiert.

Hauptnachteil von Anordnungen mit Wärmerückgewinnung zwischen mehr als zwei Adsorbern ist der hohe apparative Aufwand, der für die (thermisch voneinander zu isolierenden) Adsorber und ihre wechselnden Verschaltungen zu betreiben ist. Der erreichbare COP steigt hier mit der Anzahl der Adsorber, zugleich steigt aber der apparative Aufwand und damit die Kosten der Kältemaschine / Wärmepumpe.

Zum Stand der Technik von Adsorptionskältemaschinen lässt sich allgemein sagen, dass gegenüber der marktbeherrschenden Technik der Kompressionskältemaschinen vor allem die Leistungsdichte (SCP) der Adsorptionsgeräte noch deutlich gesteigert werden muss, um eine Konkurrenzfähigkeit zu erreichen. Zugleich muss aber für viele potenzielle Anwendungsfelder auch der COP der Adsorptionsmaschinen erhöht werden, um z.B. bei Erzeugung der Antriebswärme durch einen fossilen Brennstoff primärenergetische Vorteile gegenüber stromgetriebenen Kompressionsgeräten zu erreichen.

In den letzten Jahren wurden deutliche Fortschritte in Richtung einer höheren Leistungsdichte erzielt. So entwickelte z.B. die SorTech AG ein Verfahren zur Beschichtung von Wärmetauschern durch die konsumptive Aufkristallisation von Zeolithen auf Aluminium. Dies ist in DE 102004052976 A1, "Verfahren zur Herstellung eines mit einer Zeolith-Schicht beschichteten Substrats" beschrieben. Durch den engen thermischen Kontakt zwischen Zeolith und Wärmetauscherblech und die geringe Dicke der Zeolithschicht kann die dem Wärmetauscher entziehbare Adsorptionsleistung gegenüber einer Schüttung oder Klebung von Zeolith-Pellets deutlich erhöht werden. Leider wird diese Verbesserung der Leistungsdichte zunächst durch ein Absinken des COP erkauft. Aufgrund der dünnen Zeolithschicht ist nämlich das Massenverhältnis von Adsorbens zu Wärmetauscher und somit über den Adsorptionszyklus das Wärmeverhältnis von sorptiver zu sensibler Wärme kleiner als bei vergleichbaren Systemen mit Zeolith-Schüttungen. Bei einem ungünstigen Wärmeverhältnis sorptiv/sensibel, wie es gerade für Systeme zu erwarten ist, die eine hohe Leistungsdichte ermöglichen, sind daher verstärkte Anstrengungen zur Erhöhung des COP erforderlich. Dies betrifft sowohl die Rückgewinnung der bei der Desorption dem Adsorber zugeführten sensiblen Wärme als auch die Verringerung der Entropieproduktion durch die Kopplung des Adsorbers an die externen Wärmequellen und -senken.

In der Offenlegungsschrift DE 199 08 666 A1 mit dem Titel "Sorptionswärmepumpe / Kältemaschine mit Erwärmung des bisherigen Adsorbers auf Desorptionstemperatur durch Adsorption" wird die Verwendung eines temperaturgeschichteten Speichers ("Schichtspeicher") im Zusammenhang mit einer Adsorptionswärmepumpe beschrieben. Dabei geht es in erster Linie um eine Wärmerückgewinnung zwischen zwei Verdampfer/Kondensator-Bauteilen mittels eines Schichtspeichers. In der hier beschriebenen Adsorptionswärmepumpe werden die beiden Adsorber nach dem "thermal wave"-Verfahren betrieben. Jedem Adsorber ist ein Bauteil fest zugeordnet, das abwechselnd die Funktion des Verdampfers und Kondensators übernimmt. Aufgrund dieser Besonderheit in der Konstruktion der Wärmepumpe, durch die Ventile zwischen den Adsorbern und Verdampfer / Kondensator eingespart werden, vollzieht das Bauteil bei jedem Wechsel zwischen Verdampfer- und Kondensatorfunktion einen entsprechenden Temperaturwechsel. Da die beiden den beiden Adsorbern zugeordneten Bauteile ihre Funktion gleichzeitig wechseln, besteht die Möglichkeit einer Wärmerückgewinnung zwischen diesen beiden Komponenten. Es werden verschiedene

### Beschreibung - Austauschseiten

Möglichkeiten beschrieben, diese Wärmerückgewinnung effizient mittels eines Schichtspeichers zu realisieren.

Schichtwärmespeicher sind aus dem Stand der Technik bekannt. Beispiele werden in DE 3905874 C2 und DE_10212688A1 (Fa. Solvis) sowie EP 1076219 B1 (Fa. Sailer) beschrieben. Gemäß ihrem Anwendungszweck der Einschichtung von Wärme aus Solarkollektoren und Bereitstellung von Wärme für Heizung und Brauchwasser enthalten diese Speicher jedoch keine Vorrichtungen zur temperaturgesteuerten Entnahme von Fluid aus wählbarer Speicherhöhe.

Aus der US 4,509,337 A ist eine Kühleinrichtung gezeigt, welche Solarenergie nutzt. Hierzu ist ein Solarkollektor vorhanden, mit dem solare Wärme bereitgestellt werden kann. Die Wärme dient zum Betrieb einer Sorptionswärmepumpe. Überschüssige Wärme kann in einem Wärmespeicher gespeichert werden und bei mangelnder Solarstrahlung entnommen werden.

Aus der DE 199 08 666 A1 ist eine Sorptionswärmepumpe bekannt, bei der ein Austausch von Wärme zwischen Verdampfer und Kondensator offenbart ist. Im Titel ist auch genannt, dass der bisherige Adsorber durch Adsorption auf Desorptionstemperatur erwärmt wird.

### Beschreibung

Der vorliegenden Erfindung liegt daher die Aufgabe zugrunde, eine einfach realisierbare Adsorptionswärmepumpe bereitzustellen, welche einen möglichst hohen COP und zugleich eine hohe Leistungsdichte aufweist. Aufgabe der Erfindung ist es ebenso ein Verfahren zum Betrieb einer Asorptionswärmepumpe mit einem hohen COP und hoher Leistungsdichte bereitzustellen.

Diese Aufgabe wird durch die unabhängigen Ansprüche gelöst.

Unteransprüche geben vorteilhafte Weiterbildungen an.

Erfindungsgemäß wurde erkannt, dass zur Lösung der vorgenannten Aufgabe eine Anordnung bereitzustellen ist, welche eine Adsorptionswärmepumpe und einen Wärmespeicher aufweist. Diese Anordnung hat folgende Merkmale:
Im Wärmespeicher kann gleichzeitig Wärme bei unterschiedlichen Temperaturniveaus gespeichert werden;
bei der Adsorption freiwerdende Adsorptionswärme, welche für eine spätere Desorption nicht genutzt werden soll, kann an eine Wärmesenke abgegeben werden; Adsorptionswärme, welche für die Desorption genutzt werden soll, kann im Wärmespeicher bei einer von der Adsorptionstemperatur abhängigen Temperatur gespeichert werden;
Desorptionswärme kann zumindest teilweise dem Wärmespeicher bei einer gewünschten Temperatur entnommen werden;
Entscheidend ist hierbei ein Wärmespeicher, in dem gleichzeitig Wärme bei unterschiedlichen Temperaturniveaus gespeichert werden kann. Damit ist ein Wärmespeicher gemeint, in dem Wärme bei unterschiedlichen Temperaturniveaus gespeichert werden kann, ohne dass eine nennenswerte Durchmischung erfolgt und nur noch ein Temperaturniveau vorhanden wäre. Es ist nicht ausgesagt, dass dem Speicher gleichzeitig bei unterschiedlichen Temperaturniveaus Wärme zugeführt werden kann. In der Regel wird letzteres weder möglich noch erforderlich sein.

Unter der Adsorptionstemperatur wird wie üblich diejenige Temperatur verstanden, bei der die bei der Adsorption freiwerdende Wärme auftritt. Dies ist nicht die Temperatur, bei der die Wärme dem Wärmespeicher zugeführt werden kann. Vielmehr wird die Wärme stets bei einer niedrigeren Temperatur dem Wärmespeicher zugeführt. Dies liegt daran, dass für die Wärmeleitung stets eine treibende Temperaturdifferenz erforderlich ist. Die Höhe der erforderlichen Temperaturdifferenz hängt vom Wärmewiderstand zwischen Adsorber und Kühlmittel, welches die Wärme in den Wärmespeicher transportiert und von der gewünschten Reaktionsgeschwindigkeit ab. Um die freiwerdende Wärme bei einer möglichst hohen Temperatur speichern zu können und damit den COP zu erhöhen, ist auch darauf zu achten, dass eine möglichst niedrige Differenz zwischen der Temperatur des Kühlmittels,das die Adsorptionswärme zum Wärmespeicher transportiert, und der Temperatur, bei der die Wärme im Speicher gespeichert wird, besteht. Die Temperatur, bei der die Wärme im Wärmespeicher gespeichert werden kann, hängt also entscheidend von der Adsorptionstemperatur ab. Wie dargelegt, gehen jedoch auch die Temperaturdifferenzen, welche zur Wärmeleitung erforderlich sind, ein. Je nach Aufbau der Anordnung erfolgt auch eine Abkühlung beim Transport der Wärme im Kühlmittel, welche durch Wärmeverluste hervorgerufen wird.

Die beschriebene Möglichkeit zur Wärmespeicherung erlaubt erforderliche Desorptionswärme zumindest teilweise dem Wärmespeicher bei einer gewünschten Temperatur zu entnehmen. Eine vollständige Entnahme der Desorptionstemperatur ist im Dauerbetrieb auch unter idealen Bedingungen nicht möglich. Die höchste Adsorptionstemperatur, also die Temperatur, die bei der Adsorption des minimal beladenen Adsorbers frei wird, ist niedriger als die zur Desorption des minimal beladenen Adsorbers erforderliche Temperatur. Entsprechend ist die Temperatur der bei der Adsorption des maximal beladenen Adsorbers freiwerdenden Adsorptionswärme niedriger als die minimale Desorptionstemperatur. Aus diesem Grund ist eine Wärmesenke vorhanden, an die Adsorptionswärme, welche für eine spätere Desorption nicht genutzt werden soll, abgegeben werden kann. Dabei ist klar, dass diejenige Wärme, die bei einer Temperatur unterhalb der minimalen Desorptionstemperatur zur Verfügung steht, nicht genutzt werden kann. Es gibt aber auch einen Temperaturbereich über der minimalen Desorptionstemperatur, in dem Wärme nicht gespeichert werden soll, da zur Wärmeleitung wie ausgeführt stets eine Temperaturdifferenz erforderlich ist, welche von den jeweiligen Wärmewiderständen und der gewünschten Geschwindigkeit des Wärmetransports abhängt. Um einen Dauerbetrieb der Adsorptionswärmepumpe zu ermöglichen, ist eine Wärmequelle vorzusehen, mit welcher zur Desorption erforderliche Wärme in einem Temperaturniveau, das höher liegt als die im Wärmespeicher durch vorhergehende Adsorptionszyklen erreichbaren Temperaturniveaus, bereitgestellt werden kann. Mit der Wärmequelle kann bei Bedarf auch Wärme bereitgestellt werden, welche bei einem bestimmten Temperaturniveau im Wärmespeicher zwar vorhanden ist, jedoch nicht in ausreichender Menge.

In einer Weiterbildung zeichnet sich die im Anspruch 1 definierte Anordnung dadurch aus, dass in der Wärmequelle erzeugte Wärme dem Wärmespeicher bei einem gewählten Temperaturniveau zugeführt werden kann. Für einen energieeffizienten Betrieb kann es nämlich günstig sein, dass in der Wärmequelle erzeugte Wärme dem Wärmespeicher bei einem gewählten Temperaturniveau zugeführt werden kann. Dies gilt insbesondere, wenn als Wärmequelle ein thermischer Solarkollektor eingesetzt wird. Thermische Solarkollektoren haben bekanntlich das Problem, dass der Wirkungsgrad mit steigender Ausgangstemperatur des Solarkollektors sinkt, wobei es, abhängig von der Auslegung des Kollektors und den Wetterbedingungen eine maximal erreichbare Temperatur gibt. Um die für die jeweiligen Wetterbedingungen geeignete Ausgangstemperatur wählen zu können, ist ein Wärmespeicher vorteilhaft, in dem Wärme gleichzeitig bei unterschiedlichen Temperaturniveaus gespeichert werden kann. Dabei versteht es sich, dass bei der Wahl der Ausgangstemperatur des Kollektors nicht allein auf den Wirkungsgrad des Solarkollektors abgestellt werden kann, - danach wäre immer eine niedrige Ausgangstemperatur zu wählen - sondern auch der Wärmebedarf des Speichers für den nächsten Desorptionszyklus des Adsorbers zu berücksichtigen ist. Die Wärme kann auch aus Sorptionsspeichern stammen. Auch hier ist es günstig, dem Wärmespeicher bei unterschiedlichen Temperaturen Wärme zuführen zu können, da die Wärme aus dem Sorptionsspeicher bei unterschiedlichen Temperaturen anfällt. Es sind aber auch andere Wärmequellen denkbar, welche zu unterschiedlichen Zeiten Wärme bei unterschiedlicher Temperatur bereitstellen, etwa Abwärme von unregelmäßig betriebenen Maschinen.

In einer weiteren Ausführungsform der Anordnung ist der Wärmespeicher als Behälter ausgebildet, der mit einem flüssigen Wärmeträger, insbesondere Wasser oder wasserhaltigen Gemischen, mit einer temperaturabhängigen Dichte, befüllbar oder befüllt ist. Damit ergibt sich ein besonders geeigneter Wärmespeicher. Auf diese Weise wird durch die Temperaturabhängigkeit der Dichte eine Temperaturschichtung im Speicher erreicht. Es wird somit ein im Stand der Technik bekannter Schichtspeicher verwirklicht. Es ist damit auch möglich den zum Transport der Wärme eingesetzten Wärmeträger unmittelbar selbst im Wärmespeicher zu speichern. Damit entfällt die Notwendigkeit der Übertragung der Wärme von einem Wärmeträger auf einen anderen. Somit wird die Produktion von Entropie vermieden.

In einer Weiterbildung zeichnet sich die Anordnung ferner dadurch aus, dass dem Wärmespeicher Wärme bei verschiedenen Höhenstufen zuführbar und entnehmbar ist. Die Temperaturschichtung im Speicher ermöglicht eine einfache Zufuhr oder Abfuhr von Wärme bei einer bestimmten Temperatur, indem einfach die entsprechende Höhe im Speicher gewählt wird. Damit kann auf die Messung der Temperatur im Speicher verzichtet werden. Es genügt die richtige Höhe für die Zufuhr oder Entnahme von Temperatur zu wählen.

In einer Weiterbildung zeichnet sich die Anordnung dadurch aus, dass die Wärmequelle als Nacherhitzer für aus dem Wärmespeicher entnommene Wärme ausgebildet ist. Bildet man die Wärmequelle als Nacherhitzer für aus dem Wärmespeicher entnommene Wärme aus, kann auf einfache Weise eine Wärmequelle verwirklicht werden. Dies kann beispielsweise durch einen gasbefeuerten Durchlauferhitzer für aus dem Wärmespeicher entnommenen Wärmeträger gebildet werden. Auf diese Weise wird auch die Entropieproduktion begrenzt, da die hohe Temperatur, welche mit einer fossil oder elektrisch beheizten Wärmequelle erzielbar ist, nicht für eine Erwärmung eines kalten Wärmeträgers verschwendet wird, sondern für die weitere Erwärmung eines bereits vorgeheizten Wärmeträgers.

In einer Weiterbildung zeichnet sich die Anordnung dadurch aus, dass die Wärmequelle ihre Energie aus einer chemischen Reaktion, insbesondere der Verbrennung eines Energieträgers, beziehen kann. Als Wärmequelle eignet sich nämlich eine Wärmequelle, die ihre Energie aus einer chemischen Reaktion, insbesondere der Verbrennung eines Energieträgers beziehen kann. Mit derartigen fossilen Wärmequellen kann Wärme bei hoher Temperatur erzeugt werden. Auch wenn damit freilich der an sich unerwünschte Verbrauch fossiler Energie verbunden ist, ist durch die vorgestellte Anordnung eine deutliche Reduktion des Energieverbrauchs verbunden, verglichen mit konventionellen Anlagen zur Heizung oder Kühlung.

In einer Weiterbildung zeichnet sich die Anordnung dadurch aus, dass die Wärmequelle so ausgebildet ist, dass die Wärmequelle nur dem Bereich des Wärmespeichers Wärme zuführen kann, in dem sich die höchste Temperatur befindet. Da die Wärmequelle, insbesondere die vorgenannte fossil befeuerte, Wärme bei hoher Temperatur liefert, kann die Wärmequelle so ausgebildet sein, dass nur dem Bereich des Speichers Wärme zugeführt werden kann, in dem sich die höchste Temperatur im Speicher ausbilden kann, bei einem Schichtspeicher also dem obersten Bereich Bei einem Schichtspeicher ist dies der oberste Bereich, da die Dichte mit steigender Temperatur sinkt.

In einer Weiterbildung zeichnet sich die Anordnung dadurch aus, dass die Wärmequelle abhängig vom Betriebszustand der Anordnung verschiedenen Temperaturniveaus des Wärmespeichers Wärme zuführen kann. Damit kann die von der Wärmequelle stammende Wärme effizient dem Wärmespeicher zugeführt werden. Dies gilt in erster Linie für Wärmequellen, bei denen die Erzeugung Wärme höherer Temperatur nur mit niedrigerem Wirkungsgrad erfolgen kann, wie etwa den bereits erwähnten thermischen Solarkollektoren. Durch Berücksichtigung des Betriebszustands kann beispielsweise erkannt werden, dass Wärme bei einer niedrigeren Temperatur benötigt wird und die Solaranlage entsprechend betrieben werden.

Es kann eine Anordnung bereitgestellt werden, bei der Wärmequelle die Eigenschaft aufweist, dass der Gesamt-Systemwirkungsgrad steigt, wenn der Wärmequelle bei einer möglichst niedrigen thermodynamischen Mitteltemperatur Wärme entzogen wird, wobei die Wärmequelle insbesondere ein Solarkollektor oder ein Sorptionswärmespeicher ist.

In einer Weiterbildung zeichnet sich die Anordnung dadurch aus, dass die Wärmesenke zur Abgabe von Adsorptionswärme zugleich als Wärmesenke zur Abgabe von Wärme ausgebildet ist, die in einem dem Adsorber zugeordneten Kondensator anfallen kann. Um den bei der Desorption des Adsorbers entstehenden Wasserdampf abzuführen, ist nämlich ein Kondensator sinnvoll, in dem der Wasserdampf kondensiert werden kann. Das Kondensat, also das flüssige Wasser, kann an die Umgebung abgegeben werden oder dem Verdampfer zugeführt werden. In einem geschlossenem System, welches ja unter Vakuum arbeitet, wird das Kondensat in aller Regel über ein Drosselventil o. ä. wieder an die Umgebung abgegeben. Die bei der Kondensation freiwerdende Kondensationswärme kann zur Vermeidung von unnötigem apparativen Aufwand an dieselbe Wärmesenke abgeben werden, an die für die Desorption nicht nutzbare Adsorptionswärme abgeführt wird. Als Wärmesenke kommt hierbei ein Wärmetauscher in Betracht, der die Wärme an die Umgebung abgibt. Der Aufbau eignet sich grundsätzlich sowohl für offene Systeme, in denen der Wasserdampf in einem Luft/Dampf-Gemisch auftritt, als auch für geschlossene Systeme, in denen keine Luft vorhanden ist und reiner Wasserdampf zu kondensieren ist.

Eine kompakte Ausführung des Wärmespeichers ergibt sich durch einen Wärmespeicher, der mehrere Phasenwechselmaterialien mit jeweils unterschiedlichen Phasenwechseltemperaturen enthält. Nachteilig an Wärmespeichern mit Phasenwechselmaterialien ist, dass die Wärmekapazität nur im Bereich des Phasenwechsels hoch ist. Wenn ohnehin die Speicherung bei verschiedenen Temperaturniveaus erfolgen soll, kommt dieser Nachteil nicht zum tragen, wenn für die jeweiligen Temperaturniveaus jeweils Phasenwechselmaterialien mit geeigneter Phasenwechseltemperatur eingesetzt werden.

Bei einem Schichtwärmespeicher ist wie ausgeführt die Temperatur abhängig von der Höhe. Damit ist eine höhenabhängige Entnahme zugleich eine temperaturabhängige Entnahme. Häufig ist es im Betrieb sinnvoll nicht auf die Temperatur im Speicher abzustellen, sondern nur die Entnahmehöhe, welche ein Maß für die Temperatur ist, in der Regelung zu berücksichtigen. Es ist somit sinnvoll eine Weiterbildung der Anordnung vorzusehen, die sich dadurch auszeichnet, dass im Wärmespeicher eine Einrichtung vorhanden ist, Wärmeträger mit einer gewünschten Temperatur oder einer gewünschten Höhe dem Wärmespeicher zu entnehmen

Eine Möglichkeit Wärmeträger bei unterschiedlichen Höhen und somit unterscheidlichen Temperaturen einem Schichtspeicher zu entnehmen, besteht darin, ein Entnahmerohr vorzusehen, bei dem in verschiedenen Höhen absperrbare Einlässe, in der Regel Ventile, vorhanden sind. Je nachdem in welcher Schicht Wärmeträger entnommen werden soll, wird das jeweilige Ventil geöffnet. Ein derartiges System ist hydraulisch einfach und übersichtlich.

In einer Weiterbildung zeichnet sich die Anordnung dadurch aus, dass mehrere unterschiedlich tief in den Wärmeträger eintauchende Rohre vorhanden sind. Dies bringt zwar einen zunächst komplizierter erscheinenden Aufbau mit sich. Es wird aber so vermieden, dass im vom Wärmeträger umgebenen Bereich Ventil antriebe und zugehörige elektrische Anschlüsse erforderlich sind.

In einer Weiterbildung zeichnet sich die Anordnung dadurch aus, dass die unterschiedlich tief in den Wärmeträger eintauchenden Rohre mit einer Einrichtung, vorzugsweise einem Mehrwegeventil, verbunden sind, welche die Entnahme von Wärmeträger durch jeweils ein Rohr gestattet. Somit wird eine zweckmäßige Möglichkeit erreicht die Entnahme aus den verschiedenen Rohren zu steuern, , welche die Entnahme von Wärmeträger durch jeweils ein Rohr gestattet, während die anderen Rohre so verschlossen sind, dass durch diese kein Wärmeträger entnommen wird. Dies wird bevorzugt durch ein entsprechendes Mehrwegeventil verwirklicht. Dieses kann außerhalb des von Wärmeträger umgebenen Bereichs angeordnet werden.

In einer Weiterbildung zeichnet sich die Anordnung dadurch aus, dass im Wärmespeicher Einbauten, insbesondere Lochbleche oder schwammartige oder faserartige Strukturen, vorhanden sind, welche eine Durchmischung von Wärmeträger bei unterschiedlicher Temperatur verhindern. Um eine Durchmischung von Wärmeträger mit unterschiedlicher Temperatur zu vermeiden, ist es sinnvoll im Wärmespeicher waagrecht Lochbleche oder schwammartige oder faserartige Strukturen anzuordnen. Es versteht sich, dass damit eine Durchmischung nicht vollständig vermieden werden kann. Aber auch eine teilweise Verhinderung der Durchmischung ist vorteilhaft, da jede Durchmischung von Wärmeträger unterschiedlicher Temperatur zu einer unerwünschten Erhöhung der Entropie führt. Die Einlässe und Auslässe des Wärmespeichers sollten so zwischen den Lochblechen angeordnet werden, dass die Lochbleche ihre Wirkung als Hindernis für die Durchmischung nicht verlieren.

Leistungsfähige Adsorptionswärmepumpen werden erreicht, wenn das Adsorbens eine Desorptionstemperatur von mehr als 100°C erfordert. In diesem Fall sollte der Wärmespeicher für Wasser oder wasserhaltige Gemische als Druckspeicher ausgelegt sein, damit Temperaturen über 100°C im Wärmespeicher möglich sind. Es ist somit sinnvoll eine Weiterbildung der Anordnung vorzusehen, die sich dadurch auszeichnet, dass das Adsorbens eine Desorptionstemperatur von mehr als 100°C erfordert, insbesondere zeolithisch ist, und dass der Wärmespeicher für Wasser oder wasserhaltige Gemische als Druckspeicher ausgelegt ist.

Ein vorteilhafter Aufbau ergibt sich, wenn eine mehrstufige Adsorptionswärmepumpe eingesetzt wird, bei der mindestens eine Stufe durch eine der oben vorgeschlagenen Anordnungen verwirklicht wird. Der Nutzen derartiger mehrstufiger Adsorptionswärmepumpen hängt auch davon ab, zu welchen Konditionen welche Adsorptionsmaterialien zur Verfügung stehen.

Das Verfahren zum Betreiben der erfindungsgemäßen Adsorptionswärmepumpe ergibt sich aus der Beschreibung der Adsorptionswärmepumpe, so dass auf eine grundsätzliche Beschreibung des Verfahrens zur Vermeidung von Wiederholungen verzichtet. Es soll aber angeführt werden, dass eine möglichst umfassende Speicherung der bei der Adsorption freiwerdenden Wärme anzustreben ist, um einem möglichst hohen COP zu erreichen, ist. Wie bereits dargelegt, fällt ein Teil der Adsorptionswärme unterhalb der niedrigsten Desorptionstemperatur an, also unterhalb der Temperatur, welche erforderlich ist, um den maximal beladenen Adsorber zu desorbieren. In diesem Temperaturbereich zur Verfügung stehende Wärme zu speichern, ist in der Regel nicht sinnvoll, da diese Wärme für die Desorption nicht genutzt werden kann. Um die Wärme von einem Wärmeträger auf den Adsorber zu übertragen, ist eine Temperaturdifferenz erforderlich, das heißt, der Wärmeträger muss eine über der jeweiligen Desorptionstemperatur liegende Temperatur haben. Je niedriger die Temperaturdifferenz ist, desto länger dauert die Desorption. Hier ist ein im Einzelfall zu ermittelnder Kompromiss zwischen einem angestrebten hohen COP und einer hinreichenden Desorptionsgeschwindigkeit, welche die Leistung der Adsorptionswärmepumpe bestimmt, zu wählen. Welche treibende Temperaturdifferenz für die Desorption sinnvoll ist, hängt stark von den Wärmeübergangs- und Strömungsverhältnissen im Adsorber, sprich im Adsorptionswärmeübertrager, ab. Bei Adsorbern mit vielen parallelen Strömungskanälen und hohem Wärmedurchgangswert wird auch bei geringen Übertemperaturen von typischerweise 2-10 K bereits eine zufrieden stellende Desorptionsleistung erreicht. Bei Adsorbern, die durch eine große NTU-Zahl (number of transfer units; NTU = k*A/(m_punkt*c_p)) charakterisiert sind, die sich also dem Betriebsmodus der "thermal wave" annähern, sind hingegen wesentlich höhere treibende Temperaturdifferenzen gegenüber der mittleren Adsorbertemperatur, typischerweise 10 bis 60 K, sinnvoll.

Zur Einsparung von endlicher Energie ist der Einsatz thermischer Solarkollektoren grundsätzlich sinnvoll. Ein Problem beim Einsatz thermischer Solarkollektoren ist allerdings, dass die Wärme zu anderen Zeiten anfällt, als sie benötigt wird und daher eine Speicherung erfolgen muss, welche mit Aufwand und somit mit Kosten verbunden ist. Da aber bei der vorliegenden Adsorptionswärmepumpe ohnehin ein Wärmespeicher erforderlich ist, kann mit geringem zusätzlichem Aufwand die Speicherung der im thermischen Solarkollektor erhaltenen Wärme realisiert werden. Daher ist es besonders vorteilhaft, als Wärmequelle für die vorliegende Adsorptionswärmepumpe einen thermischen Solarkollektor vorzusehen.

Bei der Zufuhr von Wärme in den Wärmespeicher ist natürlich darauf zu achten, dass die Wärme in einem Temperaturbereich zugeführt wird, in welchem die Desorptionswärme benötigt wird. Daneben ist es aber sinnvoll, den Wirkungsgrad der Wärmeerzeugung in der Wärmequelle zu berücksichtigen. Insbesondere bei thermischen Solarkollektoren hängt der Wirkungsrad erheblich von der gewünschten Temperatur ab, wobei mit höherer Temperatur der Wirkungsrad sinkt.

Bisweilen ist es entbehrlich die Temperatur in den einzelnen Höhen des Schichtspeichers zu bestimmen. Es kann abhängig vom Beladungsgrad des zu desorbierenden Adsorbers die Wärme aus einer bestimmten Höhe des Speichers entnommen werden. Entsprechend kann die Wärme abhängig vom Beladungsgrad des zu adsorbierenden Speichers einer bestimmten Höhe des Schichtspeichers zugeführt werden.

In vielen Fällen ist es vorteilhaft die Wärmequelle nur dann zu betreiben, wenn dem Wärmespeicher keine Wärme mit zur desorption des Adsorbers ausreichender Temperatur entnommen werden kann. Etwa ein Gasbrenner kann leicht aus- und eingeschaltet werden und ist daher sinnvollerweise nur dann im Betrieb, wenn tatsächlich Wärme bei einem im Speicher nicht vorhandenen Temperaturniveau benötigt wird.

Mit der vorliegenden Adsorptionswärmepumpe kann auch ein Gebäude beheizt werden. Insbesondere interessant ist die Beheizung von Gebäuden, wenn der Wärmespeicher als saisonaler Speicher genutzt wird, also in sonnenreichen, warmen Monaten gewonnene Wärme gespeichert wird und in kälteren Monaten entnommen wird. Es ist damit möglich in sonnenreichen warmen Monaten mit einem thermischen Solarkollektor gewonnene Wärme zu speichern und diese Wärme in kälteren Monaten zur Heizung eines Gebäudes zu verwenden. Es ist dabei möglich, dass der Wärmespeicher, welcher zum Austausch von Adsorptions-und Desorptionswärme konzipiert ist, zugleich die Funktion des saisonalen Speichers übernimmt. Damit ist aber ein sehr großer Speicher erforderlich. Eine Alternative ist es, einen zusätzlichen saisonalen Speicher einzusetzen. Hier kommen Sorptionsspeicher, vor allem Zeolith-Speicher in Frage, bei denen Wärme bei einer Temperatur über 100°C zugeführt oder entnommen werden kann, ohne dass der Speicher als Druckbehälter ausgeführt werden muss. Zudem ermöglichen Sorptionsspeicher die Speicherung einer der Wärmemenge bei geringerem Raumbedarf. Der zusätzliche Speicher kann die Funktion der erforderlichen Wärmequelle übernehmen. Im Vergleich zu bisher bekannten Konzepten saisonaler Wärmespeicherung zur Gebäudebeheizung kann damit mit derselben gespeicherte Wärmemenge wesentlich mehr nutzbare Heizwärme gewonnen werden, da die gespeicherte Wärmemenge nicht unmittelbar zum Heizen verwendet wird, sondern zum Antrieb der Adsorptionswärmepumpe, welche Heizwärme erzeugt. Dies ist sowohl gültig, wenn ein zusätzlicher Speicher zur saisonalen Wärmespeicherung eingesetzt wird, als auch wenn der ohnehin vorhandene Wärmespeicher die Aufgabe der saisonalen Speicherung übernimmt.

Als Wärmequelle kommt zumindest teilweise ein Sorptionswärmespeicher in Betracht, dem die im Wärmespeicher nicht vorhandene Wärme entnommen werden kann. Es ist hierbei zu betonen, dass sowohl ein Wärmespeicher vorhanden ist, in dem Adsorptionswärme gespeichert und Desorptionswärme abgeführt werden kann. Zusätzlich ist ein Sorptionswärmespeicher vorhanden, dem Wärme, welche bei der geforderten Temperatur nicht oder nicht in ausreichender Menge vorhanden ist, entnommen werden kann. Insofern übernimmt der Sorptionsspeicher die Funktion der Wärmequelle. Freilich ist der Sorptionsspeicher selbst mit Wärme, etwa aus einer Solaranlage oder einem Fernwärmenetz, zu beschicken.

Bei der Verwendung eines Sorptionsspeichers als Wärmequelle kann die Erzeugung von Entropie reduziert werden. Dazu ist der Sorptionsspeicher so als Wärmequelle zu betreiben, dass mehrere Module des Sorptionsspeichers parallel entladen werden derart, dass sie sich in verschiedenen Adsorptionszuständen befinden und dem noch am weitesten desorbierten Modul Wärme auf einem höheren Temperaturniveau entnommen werden kann als dem schon weiter adsorbierten Modul, und dass im Verlaufe einer Desorptionsphase der Wärmepumpe zwischen den verschiedenen Speicher-Modulen als Antriebswärmequelle umgeschaltet wird.

Es kann ein Betriebszustand auftreten, in dem im Speicher noch Fluid bei einer Temperatur vorhanden ist, die zur weiteren Desorption des Adsorbers ausreichen würde, aber eine Entnahme aus dem Bereich dieser Temperatur nicht sinnvoll ist, da diese Temperatur unnötig hoch ist und die entsprechende Wärme sinnvoll für die Desorption des bereits weiter desorbierten Speichers einzusetzen ist. In diesem Fall kann es günstig sein, die Wärmequelle bereits bei der Entnahme der Wärme aus einem niedrigeren Temperaturniveau zuzuschalten, um die entsprechende Nacherwärmung zu ermöglichen. Ob eine derartige Nacherwärmung sinnvoll ist, hängt primär von der Energiequelle für das hohe Temperaturniveau (also den Nacherhitzer) ab. Wenn der Systemwirkungsgrad zur Bereitstellung dieser Antriebsenergie nahezu unabhängig vom Temperaturniveau ist, z.B. bei einem Brenner, der einen chemischen Energieträger wie Gas, Öl oder Biomasse verbrennt, ist es immer sinnvoll, zuerst die Wärme im Speicher soweit möglich zur Desorption zu nutzen und erst bei Unterschreiten der benötigten Desorptionstemperatur in der obersten Speicherschicht den Nacherhitzer zuzuschalten. Hängt jedoch der Systemwirkungsgrad des Nacherhitzers vom Temperaturniveau ab (wie z.B. bei einem Solarkollektor oder einem Sorptionsspeicher), so kann die oben dargestellte Zuschaltung des Nacherhitzers vor der vollständigen Erschöpfung des Schichtspeichers sinnvoll sein. In diesem Fall lässt sich ein sinnvolles Regelkriterium für das Zuschalten des Nacherhitzers aus dem Temperaturgradienten im Speicher ableiten, die Zuschaltung erfolgt dann bei Überschreitung eines Schwellwertes für den Temperaturgradienten zwischen der aktuellen Entnahmestelle und den höher gelegenen Speicherschichten.

### Beispiele

Ohne Einschränkung der Allgemeinheit wird die Erfindung, insbesondere die Anordnung der Komponenten des erfindungsgemäßen Wärmepumpensystems nachfolgend näher beschrieben.

Dabei zeigen:
Figur 1: die zuzuführende Desorptionswärme und die freiwerdende Adsorptionswärme für einen Adsorber mit dem Stoffpaar SAPO-34/Wasser, der im Zyklus einer Adsorptionskältemaschine betrieben wird unter Bedingungen, die typisch sind für die solarunterstützte Gebäudekühlung: Maximale Desorptionstemperatur 95°C, Rückkühl- und minimale Adsorbertemperatur 35°C, Verdampfertemperatur 15°C.
Figur 2: eine mögliche hydraulische Verschaltung der Komponenten in dem erfindungsgemäßen Wärmepumpensystem

Diese aus den Adsorptionsgleichgewichten des Stoffpaares berechneten Kurven geben an, welche Wärmemenge dem Adsorber bei welcher Temperatur zugeführt muss für die Desorption und wie viel Wärme dem Adsorber bei der Adsorption auf welchem Temperaturniveau entzogen werden kann. Treibende Temperaturdifferenzen zwischen Wärmeträgerfluid und Adsorber sind hier noch unberücksichtigt. Durch ihre Berücksichtigung würden die Peaks der Adsorptions- und Desorptionskurve weiter auseinandergeschoben, da bei der Desorption das Wärmeträgerfluid wärmer sein muss als das Adsorbens und bei der Adsorption kälter. Die Schnittfläche unter den beiden Kurven beschreibt die maximale Wärmemenge, die zwischen dem De- und Adsorptionsprozess zurückgewonnen werden kann. Sie setzt sich aus einem sensiblen und einem sorptiven Anteil zusammen. Zur Maximierung des COP sollte ein möglichst großer Teil dieser Wärmemenge unter der Adsorptionskurve zur Desorption (eines anderen Adsorbers oder desselben Adsorbers in einer späteren Phase des Zyklus) genutzt werden.

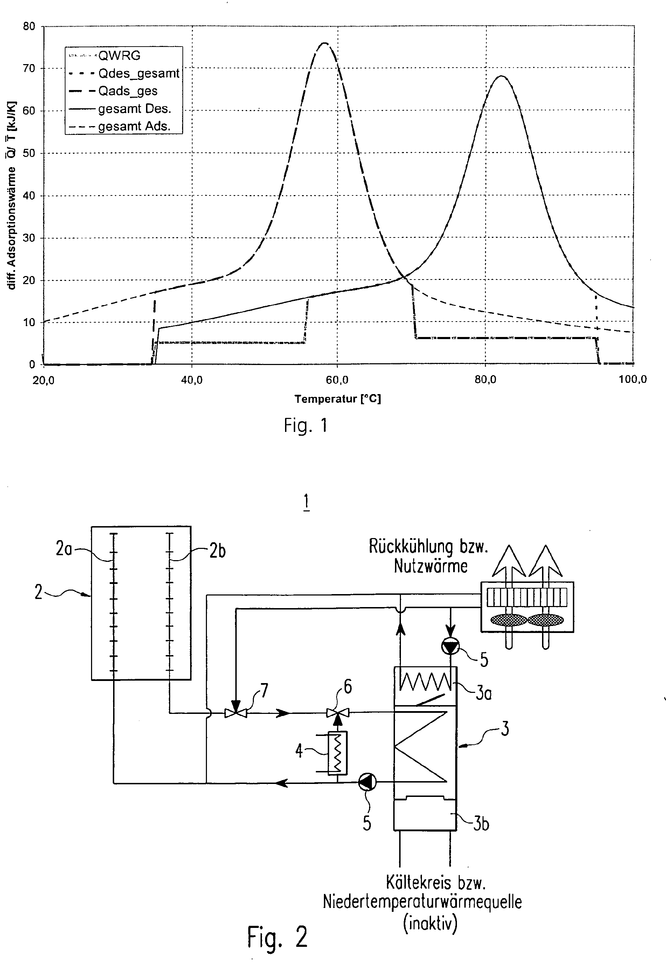

Figur 2 zeigt eine mögliche hydraulische Verschaltung der Komponenten in dem erfindungsgemäßen Wärmepumpensystem. Der Schichtspeicher 2 ist immer im hydraulischen Kreis, die Mischer V1 6 und V2 7 werden so gesteuert, dass über das Volumenstromverhältnis dem Speicher 2 nur die verfügbare Energie entnommen bzw. zugeführt wird, die restliche Energie zur Desorption wird aus dem Nacherhitzer 4 entnommen bzw. überschüssige Energie bei der Adsorption über das Rückkühlsystem abgeführt. Damit ist es möglich, die Desorptionswärmekurve des Adsorbers gemäß Figur 1 abzufahren, wobei bei jeder Temperatur die rezyklierbare Wärmemenge (entsprechend der Schnittfläche der Kurven) dem Speicher 2 entnommen wird und die zusätzlich benötigte Wärme (zwischen Ad- und Desorptionskurve) dem Nacherhitzer 4.

Der Betrieb des Adsorbers gemäß dieser Verschaltung würde jedoch einen hohen Regelungsaufwand erfordern, da die Volumenströme aus Schichtspeicher 2und Nacherhitzer 4 für jede Temperatur gemäß dem gerade benötigten Wärmeverhältnis eingestellt werden müssten. Erfindungsgemäß wurde erkannt, dass auch mit einer vereinfachten hydraulischen Verschaltung eine nahezu ideale Wärmerückgewinnung möglich ist.

Falls für den Nacherhitzer 4 ein chemischer Energieträger zum Einsatz kommt (z.B. Gasbrenner), bringt es thermodynamisch keinen Vorteil, diesem Wärme auf möglichst niedrigem Temperaturniveau zu entziehen. Für diesen Fall zeigt eine numerische Analyse der Schichtspeicherzyklen, dass es vorteilhaft ist, den Adsorber zunächst soweit wie möglich mit Wärme aus dem Schichtspeicher 2 zu desorbieren und den Nacherhitzer erst dann zuzuschalten, wenn die Temperatur der obersten Speicherschicht für die Desorption nicht mehr ausreicht. Ab diesem Zeitpunkt kann der Speicher entweder ganz aus dem hydraulischen Kreis abgetrennt und der Adsorber 3 mit dem Nacherhitzer 4 kurzgeschlossen werden, oder der Speicher 2 wird im Kreis mit Nacherhitzer 4 und Adsorber 3 nur noch in der obersten Schicht durchströmt (jedenfalls sobald der Adsorberrücklauf die höchste Speichertemperatur erreicht).

Anders stellt sich die Situation dar, wenn die Wärmequelle des Nacherhitzers ein Solarkollektor ist (dessen Wirkungsgrad mit steigender Kollektortemperatur fällt), oder wenn diese Wärmequelle ein Wärmespeicher ist, dessen nutzbarer Temperaturhub maximiert werden soll. Dann ist es für das Gesamtsystem vorteilhaft, den Nacherhitzer 4 bei möglichst geringer Temperatur zu betreiben. Die numerische Analyse der Schichtspeicherzyklen zeigt, dass die thermodynamische Mitteltemperatur der Nacherhitzung gegenüber dem oben genannten Fall gesenkt werden kann, wenn der Nacherhitzer bereits früher im Desorptionsprozess zugeschaltet wird (bevor die Temperatur der obersten Speicherschicht erreicht wird). Die Zuschaltung des Nacherhitzers 4 kann anhand des Temperaturgradienten im Speicher gesteuert werden: Wenn die Temperatur des aus dem Speicher entnommenen Fluids bei einer nur etwas höheren Entnahme stark ansteigt und deutlich über der aktuell benötigten Desorptionstemperatur liegt, wird die Entnahmehöhe wieder etwas verringert und der Nacherhitzer 4 zugeschaltet. Die im Speicher vorhandenen Schichten hoher Temperatur werden dadurch "aufgespart", bis der Adsorber 3 dieses Temperaturniveau zur Desorption benötigt, und zugleich kann das (thermodynamisch, also entropisch) mittlere Temperaturniveau der Nacherhitzung verringert werden.

Ein großer Vorteil des erfindungsgemäßen Wärmepumpensystems besteht darin, dass es sehr gut für den Betrieb unter wechselnden Zyklusbedingungen geeignet ist: Steht z.B. in der Wärmepumpenanwendung für einige Zyklen eine höhere Verdampfertemperatur zur Verfügung (verringert sich also der benötigte Temperaturhub zwischen Verdampfer und Kondensator), so vergrößert sich die Schnittfläche der beiden Wärmekurven und das System erreicht automatisch einen höheren COP.

Die benötigte Speichergröße zur Realisierung der optimalen Wärmerückgewinnung hängt stark vom Verlauf der Wärmekurven (Skizze 1) ab. Im allgemeinen wird für die zuletzt beschriebene Nacherhitzung mit gleitenden Temperaturen ein größeres Speichervolumen benötigt als für die (fossile) Nacherhitzung mit Maximaltemperatur. Im Falle der Kopplung mit einer Solaranlage kann jedoch der Schichtspeicher 2 in den ohnehin benötigten Solar-Pufferspeicher integriert werden (d.h. dieser wird mit den entsprechenden Be- und Entladevorrichtungen 2a, 2b ausgestattet). Dies stellt eine bevorzugte Ausführung des erfindungsgemäßen Systems dar, da dann nur ein Speichersystem erforderlich ist, das sowohl für die Solaranlage als auch die Wärmepumpe/Kältemaschine von Nutzen ist.

In einer vorteilhaften Ausbildung des erfindungsgemäßen Systems ist die Wärmequelle der Nacherhitzung ein Sorptionsspeicher, besonders bevorzugt ein Zeolith-Speicher, insbesondere mit einem Zeolith vom Typ LTA. Bevorzugt ist dieser Zeolith-Speicher modular aufgebaut und wird so betrieben, dass die Module nicht nacheinander vollständig adsorbiert werden, sondern immer mehrere Module parallel genutzt werden, die sich in verschiedenen Adsorptionszuständen befinden, also Wärme auf verschiedenen Temperaturniveaus liefern können. Als Wärmequelle des Nacherhitzers 4 für den Schichtspeicher 2 wird dann immer dasjenige Modul des Zeolith-Speichers genutzt, dessen Adsorptionstemperatur gerade noch hoch genug ist. Ein solches System ist besonders gut für die saisonale solare Wärmespeicherung geeignet mit Solarkollektoren, wie sie derzeit für Prozesswärme-Anwendungen im Temperaturbereich von 100-250°C entwickelt werden. Mit diesen Kollektoren ist eine direkte solare Desorption eines Zeolith-Speichers mit billig verfügbaren Zeolithen (z.B. 4A) möglich. Die effektive Speicherdichte des Zeolith-Speichers wird durch den Betrieb mit dem erfindungsgemäßen Wärmepumpensystem erhöht, da die gespeicherte Wärme nicht direkt zur Gebäudeheizung genutzt wird, sondern zum Antrieb der COP-optimierten Wärmepumpe genutzt wird. Dadurch wird mit marktverfügbarem, billigem Zeolith ein Wärmespeicher mit effektiver Energiedichte von bis zu 250 kWh/m3 möglich.

In Verbindung mit Anlagen zur thermischen Solarenergienutzung weist das erfindungsgemäße Wärmepumpensystem weitere Vorteile auf bzw. ermöglicht die Nutzung von Synergieeffekten. Beispielsweise kann in der Anwendung der solarunterstützten Gebäudekühlung der COP der Kältemaschine durch Ausnutzung der Tag/Nacht-Temperaturdifferenz erhöht werden. Dazu wird ein Kältespeicher in das System integriert, der beispielsweise ein Phasenwechselmaterial enthält, dessen Schmelzpunkt knapp oberhalb der nächtlichen Außentemperatur liegt (für gemäßigte Klimata z.B. bei 26°C). Dieser Speicher kann nachts über den Rückkühler der Wärmepumpe Wärme an die Umgebung abgeben, wobei nur die Pumpenergie für den Umlauf des Wärmeträgerfluids zugeführt werden muss. Tagsüber kann die gespeicherte "Kälte" genutzt werden, um in bestimmten Phasen des Kältemaschinenzyklus die Kondensatortemperatur zu senken. Dies ist insbesondere am Ende der Desorptionsphase des oder der Adsorber 3 sinnvoll, weil durch Absenkung der Kondensatortemperatur eine weitere Desorption bei geringerer Temperatur möglich ist, so dass mehr Wärme, die sich noch aus dem letzten Adsorptionszyklus im Schichtspeicher 2 befindet, zur Desorption genutzt werden kann und der Nacherhitzer 4somit eine geringere Wärmemenge aufbringen muss und/oder die Nachheiz-Wärme bei geringerer Temperatur (also höherem Kollektorwirkungsgrad) zugeführt werden kann. So setzt das erfindungsgemäße Wärmepumpensystem den Effekt des Kältespeichers in einen höheren COP der Kältemaschine bzw. eine höhere Effizienz des Gesamtsystems um.

Werden hydrophile Zeolithe als Adsorbentien verwendet (z.B. Zeolithe A, X, Y), so werden hohe Desorptionstemperaturen (typisch 150°C) benötigt. Wird nur ein Temperaturhub von 20-30 K für die Anwendung benötigt (z.B. für die solare Kühlung mit Kühldecken oder die Heizung mit Erdreichwärmetauschern und Niedertemperatur-Flächenheizungen), so ist die Schnittfläche zwischen den recht flach verlaufenden Adsorptions- und Desorptionswärmekurven des Zeoliths sehr groß. Dies bedeutet, dass ein großer Teil der Adsorptionswärme im Schichtspeicher 2 zwischengespeichert und zur Desorption verwendet werden kann, so dass ein hoher COP erreicht werden kann. Mit dem erfindungsgemäßen System ist es prinzipiell möglich, COP-Werte zu erreichen, die sonst nur mit mehrstufigen Sorptionswärmepumpen erreicht werden können. Ob dies tatsächlich gelingt, hängt vor allem von der Qualität der Temperaturschichtung im Schichtspeicher 2 und der Genauigkeit der Steuerung der Be- und Entladungshöhe des Speichers ab. Daher werden im folgenden einige vorteilhafte Ausgestaltungen des Schichtspeichers angeführt.

Für den Betrieb der Wärmepumpe werden typischerweise höhere leistungsbezogene Volumenströme durch den Schichtspeicher 2 benötigt, als dies bei thermischen Solaranlagen der Fall ist, da die Temperaturspreizung am Adsorber in typischen Anwendungsfällen deutlich kleiner sein wird als am Solarkollektor. Hohe Volumenströme stellen für jeden Schichtspeicher eine Herausforderung dar, da hohe Strömungsgeschwindigkeiten sehr leicht zur Verwirbelungen und Vermischungen im Speicher führen, die die Temperaturschichtung zerstören. Aus der Solartechnik bekannte Schichtspeicher wie der mit Membranklappen versehene Speicher der Firma Solvis (DE 3905874 C2**)** dürften sich für die erfindungsgemäße Anwendung als ungeeignet erweisen. Der Schichtspeicher 2 des erfindungsgemäßen Systems sollte daher bevorzugt Vorrichtungen aufweisen, die die vertikale Durchmischung des Speichers behindern. Dies kann z.B. durch in geringem Abstand horizontal im Speicher liegende Lochbleche erreicht werden. Bevorzugt sind in der Nähe der Fluidein- und -auslässe der Einschicht- und Ausschichtrohre strömungsdämpfende Strukturen in den Speicher integriert, beispielsweise schwamm- oder faserartige Strukturen. In einer bevorzugten Ausführung sind die erwähnten Lochbleche in der Umgebung der Fluidein- und -auslässe massiv, so dass an diesen Stellen keine vertikale Durchmischung möglich ist. Zwischen je zwei Lochblechen ist bevorzugt um die Fluidein- und Auslässe herum eine ringförmige Dämpfungsstruktur angebracht, die zu einer Verminderung der lokalen Strömungsgeschwindigkeit und zu einer Homogenisierung der Strömung über den Umfang des Dämpfungsringes führt. Die Einschichtung des Adsorberrücklaufs in den Speicher kann prinzipiell passiv erfolgen, z.B. über die in der EP 1076219 B1 sowie in dem Artikel "Schichtenspeichertechnologie für solare Warmwasserbereitung und Heizungsunterstützung" von Roland Sailer, HeizungsJournal Juni 2000, S. 26-28, beschriebenen Vorrichtungen.

Um Problemen bzgl. der Durchmischung des Speichers zu begegnen, kann es sinnvoll sein, die Temperaturspreizung beim Adsorberdurchlauf zu vergrößern und den Volumenstrom entsprechend zu verringern. In diesem Fall ist es sinnvoll, den Adsorber ähnlich aufzubauen wie im Falle einer "thermal wave" (siehe Beschreibung durch die charakteristischen Kennzahlen in US 4,694,659**).** Ein wesentlicher Unterschied zum Betrieb des Adsorbers im Fall der "thermal wave" bleibt, dass die Wellenlänge der "thermal wave" im erfindungsgemäßen System länger sein darf als das durchströmte Adsorbens-Bett, wohingegen sie gemäß der US 4,694,659 kürzer sein soll als das Adsorbens-Bett. In dem erfindungsgemäßen System bleibt die Rücklauftemperatur aus dem Adsorber 3 also nicht bis kurz vor dem Ende des Adsorptionsprozesses nahe der maximalen Adsorptionstemperatur, sondern fällt schon vorher signifikant ab. Anders als bei der "thermal wave"-Anordnung nach Shelton (US 4,694,659) wirkt sich dies aufgrund des Schichtspeichers 2 nicht negativ auf den COP aus. Die Gestaltung des Adsorbers 3 als Wärmetauscher mit einem langgezogenen Pfad für das Wärmeträgerfluid erfüllt hier lediglich den Zweck, einen Betrieb des Adsorbers mit großer Temperaturspreizung zwischen Ein- und Auslass ohne große interne Irreversibilitäten (durch Wärmeleitung innerhalb des Adsorbers) zu ermöglichen, um somit den Volumenstrom durch den Schichtspeicher verringern zu können und eine bessere Speicherschichtung zu erreichen.

Im Falle der Verwendung von Adsorbentien, die Desorptionstemperaturen von mehr als 100°C erfordern, kann die Ausführung des Schichtspeichers 2 als Druckspeicher sinnvoll sein, so dass Wasser als Hauptbestandteil des Wärmeträgerfluids verwendet werden kann. Auch bei thermischen Solarkollektoren für den "mittleren Temperaturbereich" von ca. 100°C-250°C gibt es Entwicklungstendenzen, Druckwasser anstelle von Thermoöl für den Kollektorkreis einzusetzen (siehe z.B. "Medium Temperature Collectors", IEA-SHC Task 33 report, Hrsg. W. Weiss und M. Rommel, Mai 2005; http://energytech.at/pdf/medium temperature collectors task33.pdf). Derartige Kollektorsysteme können direkt in den Schichtspeicher 2 der Wärmepumpe einspeisen, ohne einen zusätzlichen Wärmetauscher zu benötigen. Allgemein kann die Einschichtung aus dem Solarkollektor in den Speicher 2 in vielen Fällen vorteilhaft über eine dem Stand der Technik entsprechende Schichtladelanze 2a erfolgen (passiv, also über die Dichteunterschiede des Fluids im Speicher 2 gesteuert). Über eine Regelung des Volumenstromes durch den Kollektor kann die Temperatur (und Einschichthöhe) des Fluids aus dem Kollektor gesteuert werden, um sich dem für die Desorption erforderlichen Schichtprofil des Speichers 2 anzunähern und den Bedarf an nicht-solarer Nachheizenergie zu minimieren.

In einer vorteilhaften Ausführung des erfindungsgemäßen Systems ist der Nachheizer 4 in den oberen Bereich des Schichtspeichers 2 integriert, wie dies z.B. aus dem Stand der Technik der solaren Kombianlagen bekannt ist (z.B. EP_0841522A2).

### Bezugszeichenliste

- 1:: Hydr. Verschaltung
- 2:: Schichtspeicher
- 2a:: Ladelanze
- 2b:: Entladelanze
- 3:: Adsorber
- 3a:: Kondensator
- 3b:: Verdampfer
- 4:: Nacherhitzer
- 5:: Pumpe
- 6:: Mischer V1
- 7:: Mischer V2

## Patentansprüche

1. Anordnung aufweisend eine Adsorptionswärmepumpe mit mindestens einem Adsorber (3) und mindestens einen Wärmespeicher (2), mit folgenden Merkmalen:
im Wärmespeicher 2 kann gleichzeitig Wärme bei unterschiedlichen Temperaturniveaus gespeichert werden;
bei der Adsorption freiwerdende Adsorptionswärme, welche für eine spätere Desorption nicht genutzt werden soll, kann an eine Wärmesenke abgegeben werden;
Desorptionswärme kann zumindest teilweise dem Wärmespeicher (2) bei einer gewünschten Temperatur entnommen werden;
eine Wärmequelle, insbesondere ein thermischer Solarkollektor, ist vorhanden, mit welcher zur Desorption erforderliche Wärme in einem Temperaturniveau, das höher liegt als die durch vorhergehende Adsorptionszyklen im Wärmespeicher (2) erreichbaren Temperaturniveaus, bereitgestellt werden kann und/oder Wärme bereitgestellt werden kann, welche im Wärmespeicher (2) nicht in der erforderlichen Menge vorliegt
**dadurch gekennzeichnet, dass**
Adsorptionswärme, welche für die Desorption genutzt werden soll, im Wärmespeicher bei einer von der Adsorptionstemperatur abhängigen Temperatur gespeichert werden kann.

2. Anordnung nach Anspruch 1, **dadurch gekennzeichnet, dass** die Wärmequelle so ausgebildet ist, dass die Wärmequelle nur dem Bereich des Wärmespeichers (2) Wärme zuführen kann, in dem sich die höchste Temperatur im Wärmespeicher (2) ausbilden kann.

3. Anordnung nach einem der vorhergehenden Ansprüche, **dadurch gekennzeichnet, dass** die Wärmequelle die Eigenschaft aufweist, dass der Gesamt-Systemwirkungsgrad steigt, wenn der Wärmequelle bei einer möglichst niedrigen thermodynamischen Mitteltemperatur Wärme entzogen wird, wobei die Wärmequelle insbesondere ein Solarkollektor oder ein Sorptionswärmespeicher ist.

4. Anordnung nach einem der vorhergehenden Ansprüche, **dadurch gekennzeichnet, dass** der Wärmespeicher (2) Phasenwechselmaterialien mit unterschiedlichen Phasenwechseltemperaturen enthält.

5. Verfahren zum Betreiben einer Adsorptionswärmepumpe durch abwechselnde Adsorption und Desorption eines Adsorbers mit folgenden Schritten:
der Adsorber wird adsorbiert und freiwerdende Adsorptionswärme, die bei einer für die Desorption nicht verwertbaren Temperatur zur Verfügung steht, wird an eine geeignete Wärmesenke abgegeben;
Adsorptionswärme, welche bei einer für die Desorption verwertbaren Temperatur zur Verfügung steht, wird einem Wärmespeicher (2), in dem gleichzeitig Wärme bei unterschiedlichen Temperaturniveaus gespeichert werden kann, zugeführt, wobei die Adsorptionswärme bei einem von der jeweiligen Adsorptionstemperatur abhängigen Temperaturniveau gespeichert wird;
der Adsorber wird desorbiert,
**dadurch gekennzeichnet, dass**
die zur Desorption erforderliche Desorptionswärme dem Wärmespeicher (2) bei einer von der jeweiligen Desorptionstemperatur abhängigen Temperatur entnommen wird, wobei Desorptionswärme, welche bei einer Temperatur und /oder in einer Menge benötigt wird, die im Wärmespeicher (2) nicht zur Verfügung steht, aus einer zusätzlichen Wärmequelle bereitgestellt wird.

6. Verfahren nach Anspruch 5, **dadurch gekennzeichnet, dass** dem Wärmespeicher (2) von einer Wärmequelle, insbesondere einem thermischen Solarkollektor Wärme zugeführt wird.

7. Verfahren nach einem der Ansprüche 5 oder 6, **dadurch gekennzeichnet, dass** bei der Wahl der Temperatur, bei der die Wärme dem Wärmespeicher (2) zugeführt wird, der Wirkungsgrad der Wärmeerzeugung in der Wärmequelle berücksichtigt wird.

8. Verfahren nach einem der Ansprüche 5 bis 7, **dadurch gekennzeichnet, dass** als Wärmespeicher ein Schichtspeicher (2), in dem in unterschiedlichen Höhen eine unterschiedliche Temperatur vorhanden ist, eingesetzt wird und abhängig vom Beladungsgrad des zu desorbierenden Adsorbers (3) die Wärme aus einer bestimmten Höhe des Schichtspeichers (2) entnommen wird und abhängig vom Beladungsgrad des zu adsorbierenden Adsorbers (3) die freiwerdende Wärme einer bestimmten Höhe des Schichtspeichers (2) zugeführt wird.

9. Verfahren nach einem der Ansprüche 5 bis 8, **dadurch gekennzeichnet, dass** die Wärmequelle nur dann betrieben wird, wenn dem Wärmespeicher (2) keine Wärme mit zur Desorption des Adsorbers ausreichender Temperatur entnommen werden kann.

10. Verfahren nach einem der Ansprüche 5 bis 9, **dadurch gekennzeichnet, dass** die Adsorptionswärmepumpe zur Beheizung eines Gebäudes verwendet wird,

11. Verfahren nach einem der Ansprüche 5 bis 10, **dadurch gekennzeichnet, dass** als Wärmequelle zumindest teilweise ein Sorptionsspeicher eingesetzt wird, der als saisonaler Wärmespeicher ausgeführt sein kann.

12. Verfahren nach Anspruch 11 , **dadurch gekennzeichnet, dass** bei der Entladung des Sorptionsspeichers zum Antrieb der Wärmepumpe dieser so betrieben wird, dass mehrere Module des Sorptionsspeichers parallel entladen werden derart, dass sie sich in verschiedenen Adsorptionszuständen befinden und dem noch am weitesten desorbierten Modul Wärme auf einem höheren Temperaturniveau entnommen werden kann als dem schon weiter adsorbierten Modul, und dass im Verlaufe einer Desorptionsphase der Wärmepumpe zwischen den verschiedenen Speicher-Modulen als Antriebswärmequelle umgeschaltet wird.

13. Verfahren nach einem der Ansprüche 5 bis 12, **dadurch gekennzeichnet, dass** bei der Desorption eines Adsorbers die Wärmequelle bereits zugeschaltet wird zur Nacherhitzung von Fluid, wenn im Speicher noch Schichten verfügbar sind, deren Temperatur zur weiteren Desorption des Adsorbers ausreichen würde;

14. Verfahren nach Anspruch 13, **dadurch gekennzeichnet, dass** die Wärmequelle während der Desorption eines Adsorbers zugeschaltet wird, wenn das Fluid aus einer definierten Mindesthöhe des Wärmespeichers (2) entnommen wird und der Temperaturgradient an der Entnahmestelle einen voreingestellten Grenzwert überschreitet.

## Claims

1. Arrangement having an adsorption heat pump with at least one adsorber (3) and at least one heat store (2), having the following features:
in the heat store (2), it is possible to simultaneously store heat at different temperatures;
adsorption heat released during adsorption, and not to be used for subsequent desorption, can be discharged to a heat sink;
desorption heat can be taken, at least in part, from the heat store (2) at a desired temperature;
there is a heat source, in particular a thermal solar collector, with which it is possible to provide heat required for desorption at a temperature that is higher than the temperature that can be achieved in the heat store (2) by preceding adsorption cycles, and/or it is possible to provide heat which is not available in the heat store (2) in the necessary quantity
**characterized in that**
adsorption heat that is to be used for desorption can be stored in the heat store at a temperature which is dependent on the adsorption temperature.

2. Arrangement according to Claim 1, **characterized in that** the heat source is designed such that the heat source can supply heat only to that region of the heat store (2) in which it is possible to establish the highest temperature in the heat store (2).

3. Arrangement according to either of the preceding claims, **characterized in that** the heat source has the property that the overall system efficiency increases when heat is removed from the heat source at a thermodynamic average temperature that is as low as possible, wherein the heat source is in particular a solar collector or a sorption heat store.

4. Arrangement according to one of the preceding claims, **characterized in that** the heat store (2) contains phase-change materials with different phase-change temperatures.

5. Method for operating an adsorption heat pump by alternating adsorption and desorption of an adsorber, having the following steps:
the adsorber is adsorbed and released adsorption heat which is available at a temperature which is not useful for the desorption is discharged to a suitable heatsink; adsorption heat which is available at a temperature which is useful for the desorption is supplied to a heat store (2) in which it is possible to simultaneously store heat at different temperatures, wherein the adsorption heat is stored at a temperature which is dependent on the respective adsorption temperature;
**characterized in that**
the desorption heat required for desorption is extracted from the heat store (2) at a temperature which is dependent on the respective desorption temperature, wherein desorption heat which is required at a temperature and/or in a quantity not available in the heat store (2) is provided by an additional heat source.

6. Method according to Claim 5, **characterized in that** heat is supplied to the heat store (2) by a heat source, in particular a thermal solar collector.

7. Method according to either of Claims 5 and 6, **characterized in that** the temperature at which the heat is supplied to the heat store (2) is chosen taking into account the efficiency of the heat generation in the heat source.

8. Method according to one of Claims 5 to 7, **characterized in that** as the heat store, use is made of a stratified storage tank (2) in which different temperatures prevail at different heights, and, depending on the degree of loading of the adsorber (3) that is to be desorbed, the heat is extracted from a certain height of the stratified storage tank (2) and, depending on the degree of loading of the adsorber (3) that is to be adsorbed, the released heat is supplied to a certain height of the stratified storage tank (2).

9. Method according to one of Claims 5 to 8, **characterized in that** the heat source is then operated only when it is not possible to extract, from the heat store (2), heat at a temperature which is sufficient for desorption of the adsorber.

10. Method according to one of Claims 5 to 9, **characterized in that** the adsorption heat pump is used for heating a building.

11. Method according to one of Claims 5 to 10, **characterized in that** as the heat source, use is made at least in part of a sorption store which can be designed as a seasonal heat store.

12. Method according to Claim 11, **characterized in that** during discharge of the sorption store for driving the heat pump, this store is operated such that multiple modules of the sorption store are discharged in parallel such that they are in different adsorption states and it is possible to extract, from the most desorbed module, heat at a higher temperature than from the more adsorbed module, and that, in the course of a desorption phase, the heat pump is switched between the various store modules as the driving heat source.

13. Method according to one of Claims 5 to 12, **characterized in that** during the desorption of an adsorber the heat source is already brought on-line for the reheating of fluid if the store still contains available layers whose temperature would be sufficient for further desorption of the adsorber.

14. Method according to Claim 13, **characterized in that** during the desorption of an adsorber the heat source is brought on-line when the fluid is extracted from a defined minimum height of the heat store (2) and the temperature gradient at the extraction point exceeds a pre-set limit value.

## Revendications

1. Ensemble présentant une pompe à chaleur à adsorption avec au moins un adsorbeur (3) et au moins un accumulateur de chaleur (2), présentant les caractéristiques suivantes:
on peut accumuler simultanément dans l'accumulateur de chaleur (2) de la chaleur à différents niveaux de température;
la chaleur d'adsorption libérée lors de l'adsorption, qui ne doit pas être utilisée pour une désorption ultérieure, peut être cédée à un puits de chaleur;
de la chaleur de désorption peut être soutirée au moins partiellement de l'accumulateur de chaleur (2) à une température désirée;
il se trouve une source de chaleur, en particulier un collecteur solaire thermique, avec laquelle on peut fournir de la chaleur nécessaire pour la désorption à un niveau de température, qui est plus élevé que les niveaux de température pouvant être atteints par des cycles d'adsorption précédents dans l'accumulateur de chaleur (2) et/ou on peut fournir de la chaleur, qui ne se trouve pas avec la quantité nécessaire dans l'accumulateur de chaleur (2),
**caractérisé en ce que** l'on peut accumuler dans l'accumulateur de chaleur de la chaleur d'adsorption, qui doit être utilisée pour la désorption, à une température dépendant de la température d'adsorption.

2. Ensemble selon la revendication 1, **caractérisé en ce que** la source de chaleur est configurée de telle manière que la source de chaleur ne puisse fournir de la chaleur qu'à la région de l'accumulateur de chaleur (2), dans laquelle la température la plus élevée peut se former dans l'accumulateur de chaleur (2).

3. Ensemble selon l'une quelconque des revendications précédentes, **caractérisé en ce que** la source de chaleur présente la propriété selon laquelle le rendement global du système augmente lorsque l'on soutire de la source de chaleur de la chaleur à une température moyenne thermodynamique aussi basse que possible, dans lequel la source de chaleur est en particulier un collecteur solaire ou un accumulateur de chaleur à sorption.

4. Ensemble selon l'une quelconque des revendications précédentes, **caractérisé en ce que** l'accumulateur de chaleur (2) contient des matériaux à changement de phase avec différentes températures de changement de phase.

5. Procédé de conduite d'une pompe à chaleur à adsorption par adsorption et désorption alternées d'un adsorbeur, comprenant les étapes suivantes:
on adsorbe l'adsorbeur et on cède à un puits de chaleur approprié la chaleur d'adsorption dégagée, qui est disponible à une température non utilisable pour la désorption;
on fournit la chaleur d'adsorption, qui est disponible à une température utilisable pour la désorption, à un accumulateur de chaleur (2), dans lequel on peut accumuler simultanément de la chaleur à différents niveaux de température, dans lequel on accumule la chaleur d'adsorption à un niveau de température dépendant de la température d'adsorption respective;
on désorbe l'absorbeur,
**caractérisé en ce que** l'on soutire de l'accumulateur de chaleur (2) de la chaleur de désorption nécessaire pour la désorption à une température dépendant de la température de désorption respective, dans lequel on fournit à partir d'une source de chaleur additionnelle de la chaleur de désorption qui est nécessaire, à une température et/ou en une quantité qui n'est pas disponible dans l'accumulateur de chaleur (2).

6. Procédé selon la revendication 5, **caractérisé en ce que** l'on fournit à l'accumulateur de chaleur (2) de la chaleur provenant d'une source de chaleur, en particulier d'un collecteur solaire thermique.

7. Procédé selon une des revendications 5 ou 6, **caractérisé en ce que** l'on tient compte du rendement de la production de chaleur dans la source de chaleur lors du choix de la température à laquelle on fournit de la chaleur à l'accumulateur de chaleur (2).

8. Procédé selon l'une quelconque des revendications 5 à 7, **caractérisé en ce que** l'on utilise comme accumulateur de chaleur un accumulateur stratifié (2), dans lequel il existe une température différente à différentes hauteurs, et on soutire de la chaleur à une hauteur déterminée de l'accumulateur stratifié (2) en fonction du degré de charge de l'adsorbeur à désorber (3) et on fournit la chaleur dégagée à une hauteur déterminée de l'accumulateur stratifié (2) en fonction du degré de charge de l'adsorbeur à adsorber (3).

9. Procédé selon l'une quelconque des revendications 5 à 8, **caractérisé en ce que** l'on ne fait fonctionner la source de chaleur que lorsque l'on ne peut pas soutirer de l'accumulateur de chaleur (2) de la chaleur avec une température suffisante pour la désorption de l'adsorbeur.

10. Procédé selon l'une quelconque des revendications 5 à 9, **caractérisé en ce que** l'on utilise la pompe à chaleur à adsorption pour le chauffage d'un bâtiment.

11. Procédé selon l'une quelconque des revendications 5 à 10, **caractérisé en ce que** l'on utilise comme source de chaleur au moins partiellement un accumulateur à sorption, qui peut être réalisé comme accumulateur de chaleur saisonnier.

12. Procédé selon la revendication 11, **caractérisé en ce que** lors de la décharge de l'accumulateur à sorption pour l'entraînement de la pompe à chaleur, on ne fait fonctionner celui-ci que de telle manière que plusieurs modules de l'accumulateur à sorption puissent être déchargés en parallèle, de telle manière qu'ils se trouvent dans des états d'adsorption différents et que de la chaleur puisse encore être soutirée du module le plus fortement désorbé à un niveau de température plus élevé que du module déjà plus adsorbé, et **en ce qu'**au cours d'une phase de désorption de la pompe à chaleur on puisse commuter entre différents modules d'accumulateur comme source de chaleur d'entraînement.

13. Procédé selon l'une quelconque des revendications 5 à 12, **caractérisé en ce que** lors de la désorption d'un adsorbeur on connecte déjà la source de chaleur pour le réchauffage de fluide, lorsque des couches sont encore disponibles dans l'accumulateur, dont la température suffirait pour la désorption ultérieure de l'adsorbeur.

14. Procédé selon la revendication 13, **caractérisé en ce que** l'on connecte la source de chaleur pendant la désorption d'un adsorbeur, lorsque l'on prélève le fluide à une hauteur minimale définie de l'accumulateur de chaleur (2) et que le gradient de température au point de prélèvement dépasse une valeur limite réglée au préalable.
